# EUROPÄISCHE PATENTSCHRIFT

(11) **EP 0 412 472 B1**
(45) Veröffentlichungstag und Bekanntmachung des Hinweises auf die Patenterteilung: **19.01.1994**
(21) Anmeldenummer: 90115027.6
(22) Anmeldetag: 04.08.1990
(51) Int. Cl.: A01G 7/00, A01G 29/00, A01C 23/02

(54) **Verfahren und Vorrichtung zum Eintrag von Sauerstoff in einen Boden**
Method and apparatus for oxygenating the soil
Méthode et dispositif pour oxygéner des sols

(30) Priorität: 07.08.1989 DE 3926075
(43) Veröffentlichungstag der Anmeldung: 13.02.1991
(73) Patentinhaber: Linde Aktiengesellschaft, 65189 Wiesbaden (DE)
(72) Erfinder: Matt, Konrad, Dr. Dipl.-Chem., D-8000 München 19 (DE)
(74) Vertreter: Schaefer, Gerhard, Dr.

(56) Entgegenhaltungen:
- EP-A- 0 229 508
- DE-A- 3 733 365
- DE-C- 3 720 621
- SOVIET INVENTIONS ILLUSTRATED,P,Q sections, Woche K 07, 30 MUrz 1983 DERWENTPUBLICATIONS LTD., London, P 11
- UMWELT, Heft 7/8-87, August 1987, VDI-Verlag, G. BATTERMANN "Mikroorganis- menzersetzen organische Schadstoffe" Seiten 417-422

## Beschreibung

Bei verschiedenen Verfahren im Bereich der Pflanzenzucht und vor allem Bodensanierung stellt sich die Aufgabe, zur Einstellung und Aufrechterhaltung aerober Verhältnisse im Boden diesem Sauerstoff in ausreichender Menge zuzuführen.

Bekannt sind Verfahren bei denen in der wasserungesättigten Bodenzone (d.h. oberhalb des Grundwasserspiegels) Sauerstoff gasförmig über gelochte Rohre oder ähnliches eingetragen wird und so zu einer Sauerstoffanreicherung der Bodenluft und des im Bodenmaterial verteilten Wassers führt.

Zum Eintrag in wassergesättigte Bodenzonen (d.h. unterhalb des Grundwasserspiegels) sind Verfahren bekannt, bei denen sauerstoffarmes Wasser aus der Bodenzone entnommen und nach oberirdischer Anreicherung mit Sauerstoff wieder in den Boden zurückgespeist wird.

Da bisher keine Lösung bekannt ist, bei der gesättigte und ungesättigte Bodenzone mit einer einzigen Vorrichtung begast werden können, ist eine gleichzeitige Begasung beider Bodenzonen bisher nur durch Kombination beider obengenannten Begasungsverfahren mit entsprechend hohem Aufwand realisierbar. Diese Problematik ist häufig dann anzutreffen, wenn Bodensanierungen nach dem sogenannten in-situ-Verfahren vorgenommen werden sollen oder müssen, d.h. der Boden an Ort und Stelle saniert werden soll, die Schadenszone jedoch bis in den Grundwasserleiter ausgedehnt ist.

Mehrfach wurde hierzu vorgeschlagen - mit entsprechendem technischem Aufwand - den Grundwasserspiegel zur Erzielung einheitlicher Verhältnisse anzuheben oder abzusenken.

Aus "Soviet Inventions Illustrated, P,Q sections, Woche K 07, 30. März 1983, Derwent Publications Ltd., London, P 11" ist ein Verfahren zum Begasen von Blumenerde bekannt, bei dem eine mit Luft und Ozon angereicherte Flüssigkeit unter Druck in die Erde eingeleitet wird.

Der vorliegenden Erfindung liegt die Aufgabe zugrunde, ein Verfahren zum Eintrag von Sauerstoff in einen Boden anzugeben, bei dem eine simultane Sauerstoffversorgung der gesättigten und ungesättigten Bodenzone ohne Manipulation des Grundwasserspiegels bei geringem technischen Aufwand ermöglicht wird.

Diese Aufgabe wird erfindungsgemäß dadurch gelöst, daß die Lösung vor dem Einspeisen in den Boden durch Eintrag eines sauerstoffhaltigen Gases in die Lösung in einem Druckreaktor bei einem Überdruck von ca. 2,5 bis ca. 50 bar mit Sauerstoff übersättigt wird.

Der Erfindung liegt dabei die Erkenntnis zugrunde, daß durch Druckerhöhung bei gegebener Temperatur größere Gasmengen zu lösen und zu transportieren sind als unter Normalbedingungen. Bei Druckverringerung entweicht das Gas aus der Flüssigphase in den darüberliegenden Gasraum.

Zur Herstellung der mit Sauerstoff übersättigten Lösung wird vorzugsweise technisch reiner Sauerstoff verwendet. Der Druckreaktor wird bei einem Überdruck betrieben, der von der gewünschten Sauerstoffanreicherung der Bodenluft bestimmt wird.

Wichtig ist hierbei, daß der Überdruck bis zur Einspeisestelle der mit Sauerstoff übersättigten Lösung in den Boden erhalten bleibt, um Ausgasungen in Zuleitungen zu vermeiden.

Als wäßrige Lösung dient vorzugsweise aus der wassergesättigten Bodenzone abgezogenes Grundwasser. Das Grundwasser wird beispielsweise mittels eines Tiefbrunnens aus einer grundwasserführenden Bodenschicht abgepumpt und in einen Druckreaktor gefördert. Dort wird sauerstoffhaltiges Gas, vorzugsweise technisch reiner Sauerstoff, unter Druck in dem Grundwasser gelöst, so daß eine mit Sauerstoff übersättigte Lösung entsteht.

In der Regel befindet sich die wasserungesättigte Bodenzone über der wassergesättigten Bodenzone. In diesem Fall wird die mit Sauerstoff übersättigte Lösung vorteilhafterweise oberhalb der wassergesättigten Bodenzone in den Boden eingespeist. Besonders günstig ist es, die Lösung unmittelbar über dem Grundwasserspiegel in die wasserungesättigte Bodenzone einzutragen. Das bei Entspannung auf Umgebungsdruck an der Einspeisestelle freiwerdende Sauerstoffgas entweicht in die ungesättigte Bodenzone und reichert dort die Bodenluft und Bodenfeuchtigkeit an. Die sauerstoffgesättigte Lösung versickert dagegen der Schwerkraft folgend in die wassergesättigte Bodenzone und dient beispielsweise zur Versorgung von Schmutzstoffe abbauenden Mikroorganismen.

In einer Weiterbildung des Erfindungsgedankens wird vorgeschlagen, neben Sauerstoff noch mindestens ein anderes sauerstoffhaltiger Gas in die Lösung einzutragen. Vorzugsweise wird Kohlendioxid gelöst und mit der Lösung in den Boden eingespeist. Auf diese Weise ist z.B.eine pH-Regulierung des Bodens möglich.

Um eine länger andauernde Flutung von Bodenporen durch ausgasenden Sauerstoff zu vermeiden, ist ein Intervallbetrieb zweckmäßig.

Eine Vorrichtung zur Durchführung des Verfahrens weist eine Sauerstoffversorgungseinrichtung, insbesondere einen Sauerstofftank oder Druckgasflaschen bzw. Flaschenbündel, und mindestens eine in den Boden eingeführte Einspeiselanze zum Eintragen von Sauerstoff in den Boden auf.

Erfindungemäß ist zwischen der Sauerstoffversorgungseinrichtung und der Einspeiselanze ein Druckreaktor zum Übersättigen der wäßrigen Lösung mit Sauerstoff zwischengeschaltet. Der Druckreaktor ist je nach dem geforderten Übersättigungsgrad auf Drücke von mindestens bis zu 50 bar ausgelegt. Die Einspeiselanze weist mindestens eine Austrittsöffnung für die übersättigte wäßrige Lösung auf, die vorzugsweise oberhalb einer wassergesättigten Bodenzone angeordnet ist. Das freiwerdende Sauerstoffgas entweicht in die wasserungesättigte Bodenzone, während die mit Sauerstoff gesättigte Lösung in die wassergesättigte Bodenzone versickert. Gemäß einer anderen Ausführungsform weist die Einspeiselanze mehrere Austrittsöffnungen auf, die teilweise oberhalb und teilweise unterhalb des Grundwasserspiegels angeordnet sind. Auf diese Weise kann sowohl in die wasserungesättigte als auch in die wassergesättigte Bodenzone die mit Sauerstoff übersättigte Lösung eingespeist werden. Eine weitere Variante sieht vor, daß die Austrittsöffnungen ausschließlich unterhalb des Grundwasserspiegels angeordnet sind. Die mit Sauerstoff übersättigte Lösung wird also in die wassergesättigte Bodenzone eingespeist. Das freiwerdende Sauerstoffgas steigt in die oberhalb des Grundwasserspiegels liegende wasserungesättigte Bodenzone auf, während die sauerstoffgesättigte Lösung in der wassergesättigten Bodenzone verbleibt.

Zahl und Durchmesser der Öffnungen in den Lanzen müssen im Einzelfall auf Wasserdurchsatz, das zu begasende Bodenvolumen, die Durchlässigkeit des Bodens, den zulässigen Reaktorüberdruck und damit die je Volumeneinheit Wasser einzutragende Sauerstoffmenge abgestimmt werden. Ebenso sind die Leitungen zu den Begasungslanzen so zu bemessen, daß dort kein nennenswerter Druckabfall erfolgt.

Die Erfindung eignet sich für alle denkbaren Anwendungsfälle, bei denen es auf eine möglichst gleichmäßige Sauerstoffversorgung des Bodens ankommt. Insbesondere bietet die Erfindung bei der Pflanzenzucht und der Bodensanierung Vorteile.

Mit der Erfindung ist eine Sanierung kontaminierter Böden, bei denen die Kontaminationszone sowohl in der wassergesättigten als auch in der wasserungesättigten Bodenzone verläuft, mit geringem apparativem Aufwand möglich. Die Erfindung erreicht eine simultane Sauerstoffversorgung von Grundwasser, Bodenfeuchtigkeit und Bodenluft mit einem einzigen Verfahren und einer einzigen Vorrichtung.

Außerdem wird eine maximale Anreicherung der in die wassergesättigte Bodenzone versickernden bzw. darin verbleibenden Lösung erreicht. Bei der Entspannung der sauerstoffübersättigten Lösung auf Umgebungsdruck entweicht nämlich Sauerstoffgas, während eine sauerstoffgesättigte Lösung zurückbleibt.

Ferner werden keine flankierenden hydraulischen Maßnahmen notwendig, wie z.B. eine Grundwasserspiegelanhebung.

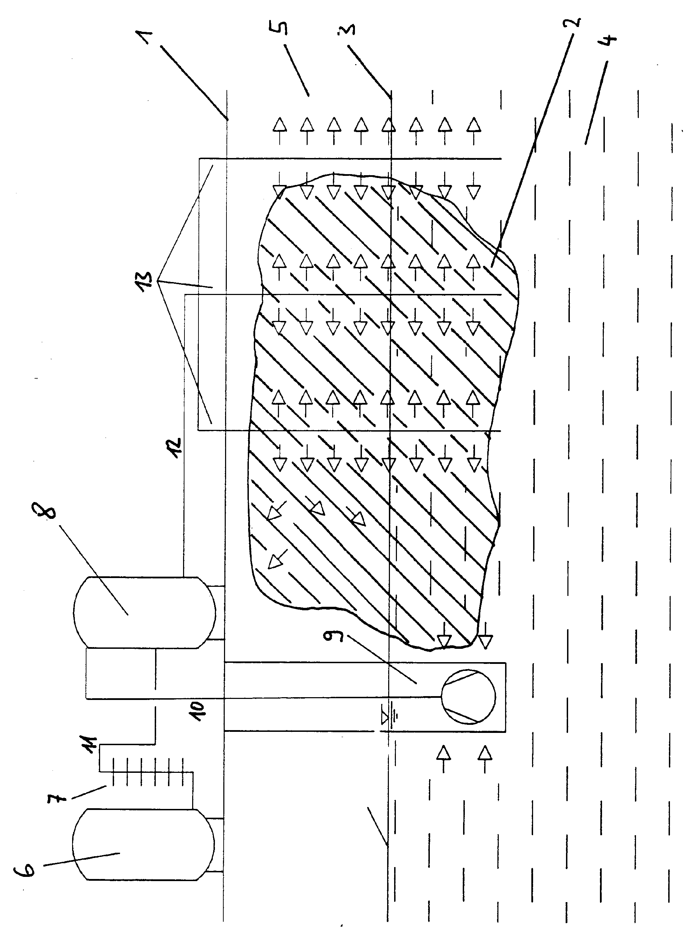

Im folgenden soll die Erfindung anhand eines in der Zeichnung schematisch dargestellten Ausführungsbeispiels näher erläutert werden.

Die Zeichnung zeigt eine Anordnung zur Sanierung eines kontaminierten Erdbodens.

Der Boden 1 weist eine kontaminierte, z.B. ölverunreinigte, Zone 2 auf, die sowohl in der unterhalb des Grundwasserspiegels 3 liegenden wassergesättigten Bodenzone 4 als auch in der darüberliegenden wasserungesättigten Bodenzone 5 verläuft. Auf dem Boden 1 steht ein Tank 6 für Flüssigsauerstoff, dem ein Verdampfer 7 und ein Druckreaktor 8 nachgeschaltet sind. Über einen Tiefbrunnen 9, der bis in die Grundwasser führende Bodenzone 4 reicht, wird Grundwasser abgezogen und über Leitung 10 zum Druckreaktor 8 gefördert. Andererseits wird gasförmiger Sauerstoff über Leitung 11 in den Druckreaktor 8 eingeleitet. Im Druckreaktor 8 wird das Sauerstoffgas bei einem Druck zwischen 2,5 und 50 bar abs. im Grundwasser gelöst, so daß eine mit Sauerstoff übersättigte Lösung entsteht. Die sauerstoffübersättigte Lösung wird über Leitung 12 mehreren Einspeiselanzen 13 zugeführt, die in den Boden 1 eingerammt sind. Die Einspeiselanzen 13 weisen mehrere Austrittsöffnungen auf, die teilweise oberhalb und teilweise unterhalb des Grundwasserspiegels 3 liegen. Über die Austrittsöffnungen wird entsprechend den in der Zeichnung dargestellten Pfeilen die Lösung sowohl in die wassergesättigte Bodenzone 5 als auch in die wasserungesättigte Bodenzone 4 eingespeist. Beim Austritt der Lösung aus den Einspeiselanzen 13 entspannt sich die Lösung auf Umgebungsdruck, so daß gasförmiger Sauerstoff frei wird, der in die wasserungesättigte Bodenzone entweicht bzw. von der wassergesättigten Bodenzone 5 in die wasserungesättigte Bodenzone 4 aufsteigt. Auf diese Weise wird in der wasserungesättigten Bodenzone 4 Bodenluft und Bodenfeuchtigkeit mit Sauerstoff angereichert, so daß ein biologischer Abbau der Bodenverunreinigungen gefördert wird. Bei der Entspannung der mit Sauerstoff übersättigten Lösung auf Umgebungsdruck verbleibt als Flüssigphase eine mit Sauerstoff gesättigte Lösung. Diese bleibt in der wassergesättigten Bodenzone 4 zurück bzw. versickert infolge der Schwerkraft aus der wasserungesättigten Bodenzone 4 in die wassergesättigte Bodenzone 5 und versorgt dort schadstoffabbauende Mikroorganismen mit Sauerstoff.

## Patentansprüche

1. Verfahren zur Sanierung kontaminierter Böden, bei denen die Kontaminationszone sowohl in einer oberhalb des Grundwasserspiegels liegenden wasserungesättigten als auch in einer unterhalb des Grundwasserspiegels liegenden wassergesättigten Bodenzone verläuft, **dadurch gekennzeichnet, daß**
a) aus der wassergesättigten Bodenzone Grundwasser abgezogen wird,
b) durch Lösen eines sauerstoffhaltigen Gases in dem abgezogenen Grundwasser bei einem Druck von ca. 2,5 bis ca. 50 bar abs. in einem Druckreaktor eine mit Sauerstoff übersättigte Lösung hergestellt wird,
c) die mit Sauerstoff übersättigte Lösung unter Beibehaltung des Drucks in den Boden eingeführt wird und
d) die mit Sauerstoff übersättigte Lösung unmittelbar über dem Grundwasserspiegel auf Umgebungsdruck entspannt und unmittelbar über dem Grundwasserspiegel in die wasserungesättigte Bodenzone eingetragen wird.

## Claims

1. A process for sanitizing contaminated soils, wherein the contamination zone extends both in a water-unsaturated soil zone located above the ground water level and in a water-saturated soil zone located below the ground water level, characterised in that
a) ground water is discharged from the water-saturated soil zone;
b) by dissolving a gas containing oxygen in the discharged ground water at a pressure of approximately 2.5 to approximately 50 bar abs. in a pressure reactor, a solution oversaturated with oxygen is produced;
c) the solution oversaturated with oxygen is introduced into the soil while maintaining the pressure and
d) the solution oversaturated with oxygen is expanded to environmental pressure directly above the ground water level and is introduced into the water-unsaturated soil zone directly above the ground water level.

## Revendications

1. Procédé de désinfection de sols contaminés dans lesquels la zone de contamination se trouve tant dans une zone de sol non saturée en eau située au dessus du niveau de la nappe phréatique que dans une zone de sol saturée en eau située au dessous du niveau de la nappe, ce procédé étant caractérisé en ce que :
a) on retire de l'eau la zone saturée,
b) on prépare une solution sursaturée en oxygène par dilution d'un gaz contenant de l'oxygène dans les eaux retirées et ce, sous une pression d'environ 2,5 à 50 bars absolus dans un réacteur sous pression,
c) on introduit dans le sol la solution sursaturée en oxygène en maintenant la pression, et
d) la solution sursaturée en oxygène est détendue immédiatement au dessus du niveau des eaux à la pression environnante et entraînée immédiatement au dessus du niveau des eaux dans la zone de sol insaturée en eau.
